# EUROPÄISCHE PATENTANMELDUNG

(11) **EP 1 998 068 A2**
(43) Veröffentlichungstag der Anmeldung: **03.12.2008**
(21) Anmeldenummer: 08009164.8
(22) Anmeldetag: 17.05.2008
(51) Int. Cl.: F16F 1/38, F16F 1/387, B60G 21/055

(54) **Elastisches Lager mit einer Elastomermetallbuchse, insbesondere für die Lagerung eines Stabi-Lenkers an einem Kraftfahrzeug**

(30) Priorität: 26.05.2007 DE 102007024741
(71) Anmelder: Jörn GmbH, 71336 Waiblingen (DE)
(72) Erfinder: Krauter, Thomas, 71540 Murrhardt (DE); Seck, Gerhard, 73630 Remshalden (DE)
(74) Vertreter: Liebl, Thomas

(57) **Zusammenfassung**

Die Erfindung betrifft ein elastisches Lager (35) mit einer Elastomermetallbuchse (1), insbesondere für die Lagerung eines Stabi-Lenkers an einem Kraftfahrzeug, mit einem formstabilen Aufnahmeauge (36) als erstem Lageranschluss, sowie einem formstabilen Lagerzapfen (29) als zweitem Lageranschluss. Weiter ist eine den Lagerzapfen (29) formschlüssig umgreifende, an einem achsparallelen Klappscharnier (3) aufklappbare Elastomermetallbuchse (1) vorgesehen, die im montierten Zustand unter Vorspannung im Elastomermaterial in das Aufnahmeauge (36) eingepresst ist. Erfindungsgemäß ist die Elastomermetallbuchse (1) im Herstellzustand ringförmig geschlossen, mit einer etwa achsparallel verlaufenden und gegenüberliegend zum Klappscharnier aufgebrachten Sollbruchstelle (4), die durch Krafteinwirkung bei oder vor dem Aufstecken der Elastomermetallbuchse (1) auf den Lagerzapfen (29) aufreißbar ist, so dass zum Aufstecken der Innendurchmesser der Elastomermetallbuchse (1) durch Aufschwenken am Klappscharnier (3) vergrößerbar ist.

## Beschreibung

Die Erfindung betrifft ein elastisches Lager mit einer Elastomermetallbuchse, insbesondere für die Lagerung eines Stabi-Lenkers an einem Kraftfahrzeug nach dem Oberbegriff des Anspruchs 1.

Ein bekanntes gattungsgemäßes elastisches Lager (EP 1 067 307 B1), insbesondere für die Lagerung eines Stabilisatorstabs an einem Kraftfahrzeug besteht aus einem formstabilen Aufnahmeauge als erstem Lageranschluss und einem formstabilen Lagerzapfen, hier als langgestreckter Stabilisatorstab, als zweitem Lageranschluss, sowie aus einer Elastomermetallbuchse. Die Elastomermetallbuchse umgreift im montiertem Zustand formschlüssig den Lagerzapfen. Dazu wird die Elastomermetallbuchse an einem fast parallelen Klappscharnier aufgeklappt und von der Seite her auf den Lagerzapfen aufgesteckt und wieder geschlossen. Anschließend wird die Anordnung in ein üblicheres einseitiges Aufnahmeauge eingepresst oder in ein mehrteiliges Aufnahmeauge eingespannt, wodurch im Elastomermaterial eine Vorspannung aufgebracht wird.

Konkret ist hier die Elastomermetallbuchse aus zwei Blechhalbschalen gebildet, die an ihrer radial äußeren Seite über deren gesamte Fläche Gummischichten aufweisen, und die zur Ausbildung des Klappscharniers an einer Längsseite über einen angeformten Gummisteg zusammenhängen. Der Vulkanisiervorgang ist hier insofern aufwendig als zwei Blechschalenteile in die Vulkanisierform in eine vorgegebene Position eingelegt und dort fixiert werden müssen. Durch die insgesamt mit gleicher Schichtdicke umlaufende Elastomerschicht der Elastomermetallbuchse ergeben sich in unterschiedlichen Radialrichtungen, sowie bei Verdrehungen gleiche elastische Federverhältnisse Differenzierungen der Federkonstanten in unterschiedlichen Raumrichtungen, insbesondere zur Ausbildung einer Lagerstelle für eine mitlenkende Achsführung in Verbindung mit einem Stabi-Lenker sind mit einem solchem elastischen Lager nicht möglich.

Weiter ist ein elastisches Lager mit einer Elastomermetallbuchse insbesondere für ein Fahrwerk eines Kraftfahrzeugs bekannt, mit einem Aufnahmeauge als erstem Lagerteil und einem Lagerinnenteil aus Metall als zweitem Lagerteil. Das Lagerinnenteil besteht hier aus einem Lagerzapfen mit beiderseitigen Anschlusspratzen auf dem festhaftend durch jeweils radial gegenüberliegende Freiräume unterbrochen Elastomerschichten angebracht sind, die im fertig montierten Zustand formschlüssig unter Vorspannung in den Elastomerschichten an der Innenwand des Aufnahmeauges anliegen. In den Freiräumen zwischen den Elastomerschichtschalen sind auf dem Lagerinnenteil jeweils Radialanschläge festhaftend angebracht, die im statischen Betriebszustand einen freien Anschlagweg zur benachbarten Anschlagwand aufweisen. Diese Anschlagwand kann entweder durch die Innenseite des Aufnahmeauges gebildet sein oder durch Außenblechschalen, welche in den Bereich der Freiräume geführt sind und dort mit Längskanten aneinandergrenzen.

Der Lagerzapfen mit den Anschlusspratzen ist hier ein einteiliges, großvolumiges und schweres Metallinnenteil, auf dem die Elastomerschichtschalen durch Vulkanisieren festhaftend angebracht sind. Der Vulkanisiervorgang ist relativ energieintensiv, da der Lagerzapfen insgesamt mit aufgeheizt werden muss. Eine Durchrutschbewegung zwischen den Elastomerschichtschalen und dem Lagerzapfen ist wegen der festhaftenden Anbringung der Elastomerschichtschalen nicht möglich. Ein solches elastisches Lager ist somit beispielsweise für eine luftgefederte Hinterachse zur Lagerung von Stabi-Lenkern nicht geeignet, da zur Einstellung der Luftfedern nach der Montage eine Relativbewegung im Lager mit einem Durchrutschen in Grundstellung erfolgen soll.

Aufgabe der Erfindung ist es, ein gattungsgemäßes elastisches Lager so weiterzubilden, dass sich eine kostengünstigere Herstellung ergibt, sowie Ausgestaltungen zur Abdeckung weiterer Einsatzfälle möglich sind.

Diese Aufgabe wird mit dem Merkmal des Anspruchs 1 gelöst.

Gemäß Anspruch 1 ist die Elastomermetallbuchse im Herstellzustand ringförmig geschlossen, mit einer etwa achsparallelverlaufenden und gegenüber dem Klappscharnier angebrachten Sollbruchstelle, diese ist durch Krafteinwirkung bei oder vor dem Aufstecken der Elastomermetallbuchse auf dem Lagerzapfen aufreißbar, sodass zum Aufstecken der Innendurchmesser der Elastomermetallbuchse durch aufschwenken am Klappscharnier vergrößerbar ist.

Eine insgesamt ringförmig herstellbare Elastomermetallbuchse ist einfach und kostengünstig, insbesondere in einem Vulkanisiervorgang herstellbar und bis zur Montage auf dem Lagerzapfen einfach handhabbar. Der Lagerzapfen ist zudem ein eigenes Bauteil, dass beim Vulkanisiervorgang nicht mitaufgeheizt werden muss. In einer Weiterbildung nach Anspruch 2 sind auf dem Lagerzapfen im axialen Abstand, entsprechend der Länge der Elastomermetallbuchse stegförmige, vorzugsweise ringförmig umlaufende Stützschultern angebracht, zwischen die die Elastomermetallbuchse aufsteckbar ist. Durch die Stützschultern erfolgt dann im fertigen montierten Zustand im Aufnahmeauge eine sichere axiale Abstützung und Fixierung.

Vorzugsweise sind am Lagerzapfen jeweils axialendseitig neben den Stützschultern Anschlusspratzen angebracht, mit denen der Lagerzapfen beispielsweise an einem Fahrzeugaufbau als erster Lageranschluss für einen Stabi-Lenker befestigbar ist.

In einer besonders bevorzugten Ausführung nach Anspruch 4 ist an wenigstens einer Stützschulter eine Konusfläche als aufschiebe Schrägfläche geformt, wobei axial über die Konusfläche und die Stützschulter die Elastomermetallbuchse, welche im Herstellzustand einen dem gegenüber kleineren Innendurchmesser aufweist, aufschiebbar ist. Durch das Aufschieben wird eine den Innendurchmesser der Elastomermetallbuchse vergrößernde Kraft aufgebracht, wodurch einerseits die Sollbruchstelle aufreißt und andererseits ein Aufschwingvorgang am Klappscharnier erfolgt. Dadurch kann die Elastomermetallbuchse in den Bereich zwischen die Stützschultern axial geschoben werden und dort durch ein Zurückschwenken am Klappscharnier den Lagerzapfen formschlüssig umgreifen. Dazu muss die Sollbruchstelle so angefertigt werden, dass sie keinen zu großen Widerstand beim axialen Aufpressen über die Konusfläche auf den Lagerzapfen bildet, zu dem ist darauf zu achten, dass die aufgerissenen Sollbruchkanten bei der Aufbringung der radialen Vorspannung durch das Aufnahmeauge den Vorspanndruck in diesem Bereich nicht unzulässig verringern, das heißt der Widerstand der aufgerissenen Sollbruchkanten darf beim Zusammendrücken nicht zu groß werden. Weiter ist bei der Auslegung des Klappscharniers darauf zu achten, dass eine dortige plastische Verformung beim aufschwenken der späteren Vorspannungen im fertig montierten Zustand entgegenwirken kann, sodass eine plastische Verformung möglichst gering sein soll, damit eine ausreichende Vorspannung auf dem Lagerzapfen an kommt. Eine Auslegung mit einem weitgehend elastischen Zurückschwenken ist daher zu bevorzugen.

In einer weiteren Ausgestaltung des elastischen Lagers nach Anspruch 5 besteht die Elastomermetallbuchse aus einem Innenbuchsenteil aus Metall oder Kunststoff auf dem festhaftend, durch jeweils radial gegenüberliegende Freiräume unterbrochen Elastomerschichten angebracht sind. An den Elastomerschichten sind weiter radial äußere Außenschalen aus Metall oder Kunststoff festhaftend angebracht, die im fertigmontierten Zustand formschlüssig unter Vorspannung an der Innenwand des Aufnahmeauges anliegen. Wobei sie entweder nur den Bodenbereich der Elastomerschichten abdecken oder am Umfang so weitergeführt sind, dass sie mit den Längsrändern im montierten Zustand aneinandergrenzen. An einem solchen Innenbuchsenteil liegt die längs verlaufende Sollbruchstelle neben einer Elastomerschicht, wo das längs verlaufende Klappscharnier liegt, etwa radial gegenüber neben der anderen gegenüberliegenden Elastomerschicht.

Weiter sind nach Anspruch 6 in den Freiräumen zwischen den Elastomerschichten in dem Innenbuchsenteil, gegebenenfalls auf dortigem Materialverdickungen des Innenbuchsenteils jeweils Radialanschläge festhaftend angebracht, die im statischen Betriebszustand einen freien Anschlag wie zu jeweils benachbarten Anschlagwand aufweisen.

Mit den Ausgestaltungen nach Anspruch 5 und Anspruch 6 ist das elastische Lager für Einsatzfälle geeignet, die unterschiedliche Steifigkeiten in unterschiedlichen Raumrichtungen erfordern.

Gemäß Anspruch 7 ist in einer besonders bevorzugten Ausführungsform das Innenbuchsenteilmaterial einheitlich durchgehend ringförmig geschlossen, wobei das Klappscharnier durch eine längsverlaufende bei der Montage jedoch nicht abreißbare Materialverdünnung gebildet ist. Alternativ kann dazu je nach den Gegebenheiten das Klappscharnier auch durch eine Elastomerschichtbrücke eines dort längsgeteilten stabilen Innenbuchsenteils gebildet sein.

Entsprechend ist in einer besonders bevorzugten Ausführungsform nach Anspruch 8 bei einem Material einheitlich ringförmig durchgehenden Innenbuchsenteil die Sollbruchstelle durch eine längsverlaufende bei der Montage auf dem Lagerzapfen jedoch abreißbare Materialverdünnung ausgeführt, alternativ dazu kann auch die Sollbruchstelle durch eine abreißbare Elastomerschichtbrücke eines dort längsgeteilten stabilen Innenbuchsenteils gebildet sein.

Die Längsverlaufende Materialverdünnung kann nach Anspruch 9 konstruktiv und herstellungstechnisch einfach, durch eine Längsnut gegebenenfalls eine perforierte Längsnut gebildet sein.

Zur Vergleichmäßigung der Spannungsverläufe im Elastomermaterial wird mit Anspruch 10 vorgeschlagen, dass die Elastomerschicht mehrlagig ausgeführt sind, indem jeweils mindestens eine, bevorzugt zwei Zwischenlöcher eingeformt sind, die vorzugsweise im Herstellzustand die Elastomerschichten mit ihren Randbereichen überragen.

In einer Weiterbildung nach Anspruch 11 sind die Innenkontur des Innenbuchsenteils und die Außenkontur der ins Aufnahmeauge eingepressten Außenschalen entsprechend der Innenkontur des Aufnahmeauges konzentrisch kreiszylinderförmig ausgeführt. Demgegenüber sind die Außenkontur des Innenbuchsenteils und die Innenkontur der Außenschalen sowie die dazwischen festhaftenden Elastomerschichten gegebenenfalls mit den Zwischenblechen in Axialrichtung gesehen flacher gestaltet, mit jeweils gegenüberliegenden Flachbereichen, die durch einen Übergangsbogen verbunden sind. Dadurch ist das elastische Lager bei einer radialen Belastung in Querrichtung zu den Elastomerschichten relativ hart und bei einer radialen Belastung in Richtung der relativ flachen Elastomerschichten und der Freiräume durch Druckbelastung relativ weich, zumindest bis gegebenenfalls die Radialanschläge anliegen und dadurch das Lager progressiv hart wird.

Das vorstehende elastische Lager ist besonders zur Lagerung eines Stabi-Lenkers einer luftgefederten Hinterachse gemäß Anspruch 12 geeignet, wobei das elastische Lager mit seiner Lagerachse quer zum Fahrzeug und damit quer zur Fahrtrichtung eingebaut ist, sodass die Elastomerschichten vertikal übereinander liegen. Wobei der Lagerzapfen aufbauseitig befestigt ist und das Aufnahmeauge endseitig Bestandteil des Stabi-Lenkers ist. Der aufbauseitige Lagerpunkt übernimmt dabei die Achslenkkräfte, sowie die Stabilisierungskräfte vom Stabi-Lenker. Weiter sollen mit einer solchen Lagerausführung ein Eigenlenkverhalten der Achse sowie eine Reduzierung von aus der Achse resultierenden Geräuschen erreicht werden.

Insbesondere soll für den vorstehenden Einsatz des Lagers mit Verbindung mit einem Stabi-Lenker das Innenbuchsenteil nach Anspruch 13 aus einer Aluminiumlegierung hergestellt werden, wobei die Innenseite des Innenbuchsenteils mit einem festhaftenden Gummifilm versehen ist, sodass das Innenbuchsenteil bei entsprechender Dimensionierung über einer vorgebbaren Drehbelastung auf dem bevorzugt gefetteten Lagerzapfen durchrutschen kann. Alternativ kann das Innenbuchsenteil nach Anspruch 14 aus Kunststoff hergestellt werden, wobei ein Durchrutschen auf dem Lagerzapfen durch mit Schmiermittel befüllbare Schmiertaschen an der Innenseite des Innenbuchsenteils ermöglicht wird. Dieses Durchrutschen soll nach einer Lagermontage am Fahrzeug zur Einstellung der Luftfedern am Montagebandende möglich sein. Insbesondere der Durchrutschvorgang dadurch möglich, dass das Vulkanisierteil mit dem Innenbuchsenteil den Elastomerschichten, den Außenschalen und den Radialanschlägen getrennt vom Lagerzapfen hergestellt wird.

Anhand der Zeichnungen wird die Erfindung weiter erläutert. Es zeigen
- Fig.1 1: eine Elastomermetallbuchse einer ersten Ausführungsform im Herstellzustand in einer axialen Ansicht,
- Fig. 2: einen Schnitt entlang der Linie A-A durch die Elastomermetallbuchse nach Fig. 1,
- Fig. 3: eine Elastomermetallbuchse einer zweiten Ausführungsform im Herstellzustand in einer axialen Ansicht,
- Fig. 4: einen Schnitt entlang der Linie B-B durch die Elastomermetallbuchse nach Fig. 3,
- Fig. 5: einen Montagezustand bei dem die Elastomermetallbuchse nach Fig. 3 axial auf einen Lagerzapfen aufgeschoben wird in axialer Ansicht,
- Fig.6: einen Montagezustand, bei dem die Elastomermetallbuchse vollständig auf den Lagerzapfen aufgesteckt ist und zwischen Stützschultern eingreift,
- Fig.7: einen Längsschnitt entlang der Linie C-C des Lagerzapfens mit aufgesteckter Elastomermetallbuchse nach Fig. 6,
- Fig. 8: eine axiale Ansicht des fertig montierten elastischen Lagers, bei dem der Lagerzapfen mit aufgesteckter Elastomermetallbuchse in ein Aufnahmeauge eingepresst ist,
- Fig. 9: einen Schnitt entlang der Linie D-D des elastischen Lager nach Fig. 8.

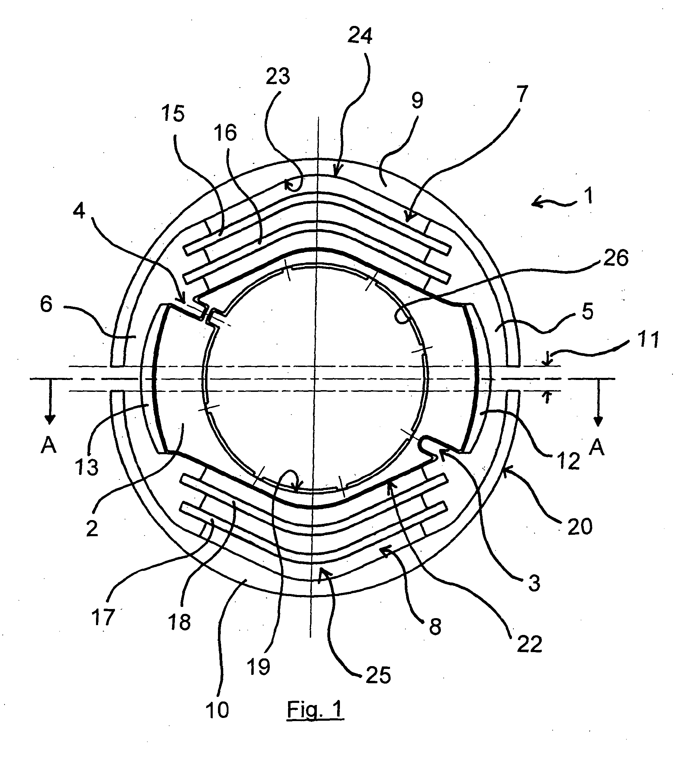

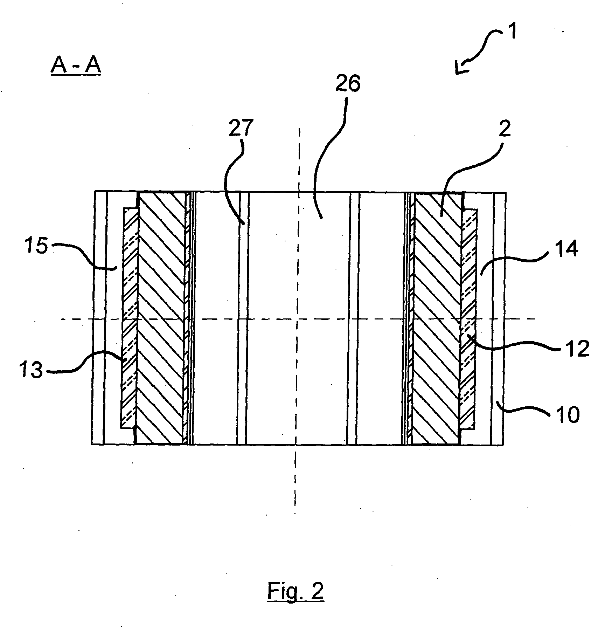

In Fig. 1 und dem dazugehörigen Längsschnitt A-A nach Fig. 2 ist eine erste Ausführungsform einer Elastomerbuchse 1 im Herstellzustand in einer axialen Ansicht gezeigt. Die Elastomerbuchse 1 besteht aus einem Innenbuchsenteil 2, welches in dieser bevorzugten Ausführungsform aus einer Aluminiumlegierung hergestellt ist. Das Innenbuchsenteil 2 ist im gezeigten Herstellzustand ringförmig geschlossen, wobei durch eine bei der Montage nicht abreißbare längsverlaufende Materialverdünnung ein Klappscharnier 3 gebildet ist. Radial gegenüberliegend ist durch eine weitere im Vergleich zum Klappscharnier 3 dünnere Materialverdünnung eine längsverlaufende Sollbruchstelle 4 gebildet. Die Materialverdünnungen sind durch Nuten gebildet, die gegebenenfalls zusätzlich eine Längsperforierung aufweisen können.

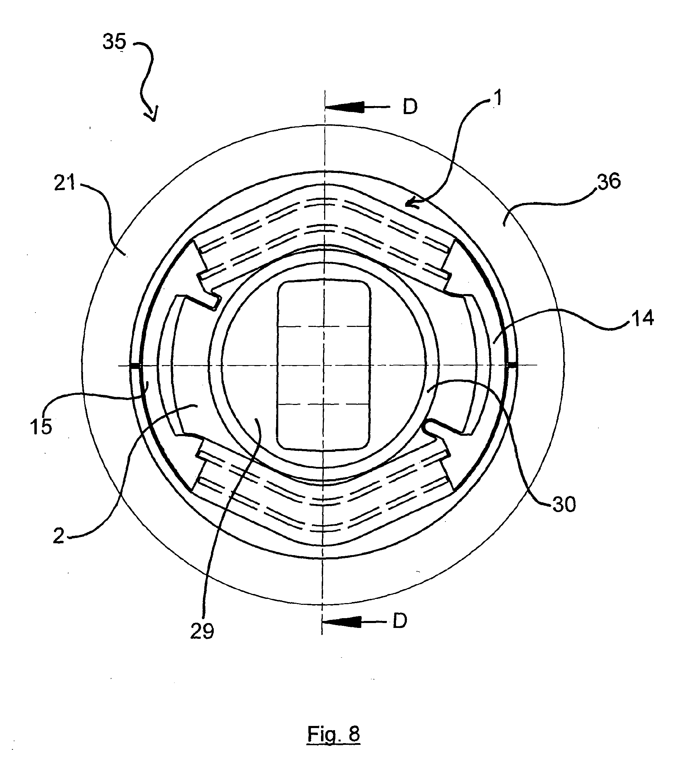

Auf dem Innenbuchsenteil 2 sind durch jeweils radial gegenüberliegende Freiräume 5, 6 unterbrochene Elastomerschichten 7, 8 angebracht, auf denen gegenüberliegende Außenschalen 9, 10 festhaftend angebracht sind. Die Außenschalen 9, 10 bestehen in dieser Ausführungsform aus Metall, beispielsweise aus der gleichen Aluminiumlegierung wie das Innenbuchsenteil, oder aus einem im Wesentlichen formstabilen Kunststoff. Die Außenschalen 9, 10 sind über dem Bogenbereich der Elastomerschichten 7, 8 halbkreiszylinderförmig weitergeführt, so dass im Herstellzustand die jeweiligen Längsränder einander mit einem Abstand 11 gegenüberliegen, welcher im unter Vorspannung eingepressten Zustand geschlossen wird (siehe Fig. 8).

Im Bereich der Freiräume 5, 6 sind auf Materialverdickungen des Innenbuchsenteils 2 Radialanschläge aus Elastomermaterial festhaftend angebracht, welche im fertig montierten statischen Betriebszustand (siehe Fig. 8) jeweils einen freien Anschlagweg 14, 14a zur jeweils benachbarten Anschlagwand aufweisen, die hier von den Außenschalen 9, 10 gebildet wird. Die Elastomerschichten 7, 8 sind jeweils mehrlagig ausgeführt in dem jeweils zwei Zwischenbleche 15, 16 und 17, 18 eingeformt sind, die im Herstellzustand die Elastomerschichten 7, 8 im Randbereich überragen.

Die Innenkontur 19 des Innenbuchsenteils 2 und die Außenkontur 20 der Außenschalen 9, 10, sowie die Innenkontur des Aufnahmeauges 21 (siehe Fig. 8) sind konzentrisch kreiszylinderförmig. Demgegenüber sind die Außenkontur 22 des Innenbuchsenteils 2 und die Innenkontur 22 der Außenschalen 9, 10 sowie die dazwischenliegenden Elastomerschichten 7, 8 flacher gestaltet mit jeweils gegenüberliegenden geraden Flächenbereichen, die jeweils durch einen Übergangsbogen 24, 25 mit vergleichsweise kleinerem Radius verbunden sind. Die Innenkontur 19 des Innenbuchsenteils 2 ist mit einem festhaftenden Gummifilm 26 versehen, welcher am Umfang versetzte Längsnuten 27 aufweist.

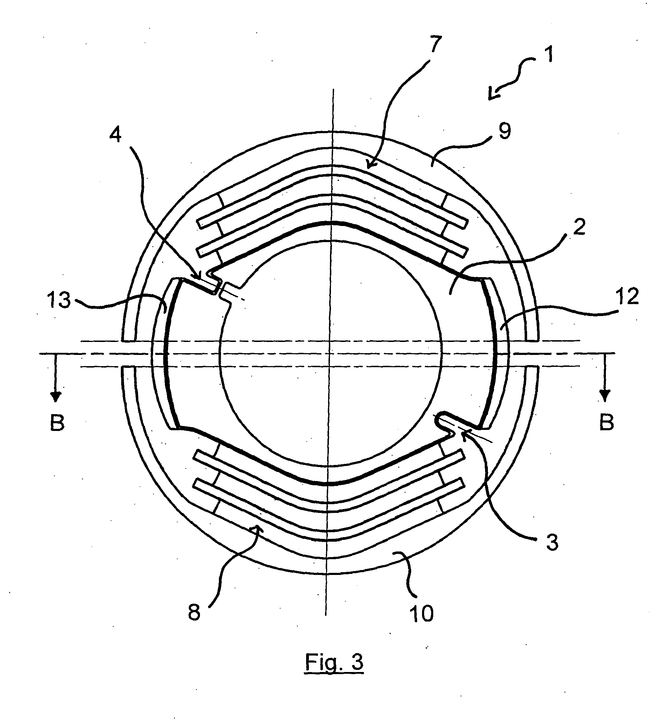

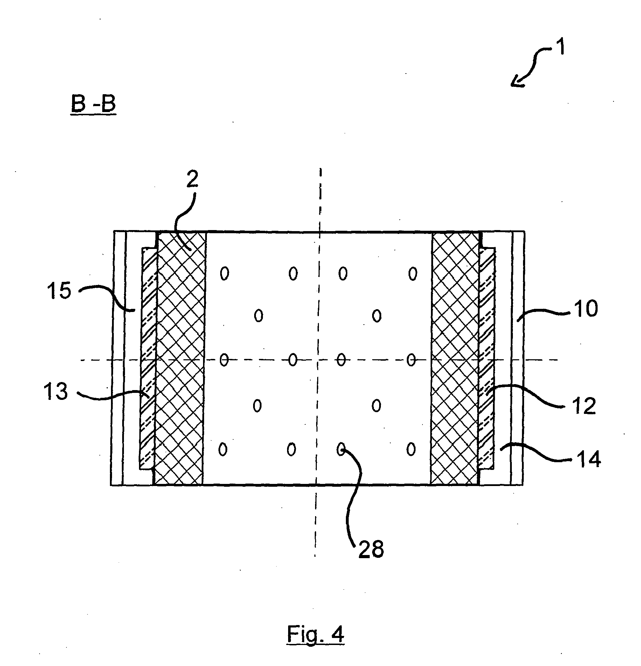

In den Fig. 3 und 4 ist eine zweite Ausführungsform einer Elastomerbuchse 1 dargestellt, die ersichtlich weitgehend entsprechend der ersten Ausführungsform nach den Fig. 1 und 2 gestaltet ist, so dass anhand der Fig. 3 und 4 nur die Unterschiede erläutert werden, wobei für gleiche Teile gleiche Bezugszeichen verwendet werden.

Das Innenbuchsenteil 2 ist bei der zweiten Ausführungsform aus einem stabilen Kunststoff hergestellt, wobei anstelle des Gummifilms 26 der ersten Ausführungsform an der Innenseite des Innenbuchsenteils 2 in der Fläche verteilt, mit Schmiermittel befüllbare Schmiertaschen 28 angebracht sind.

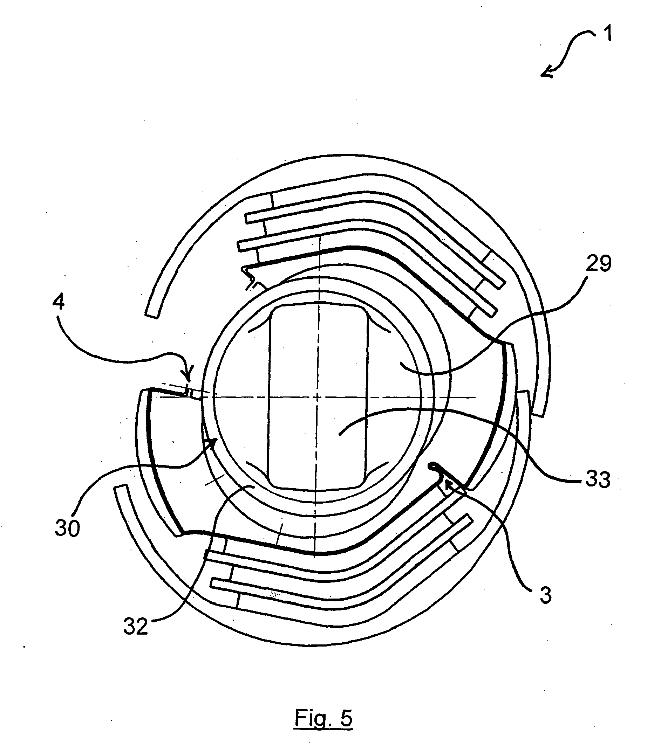

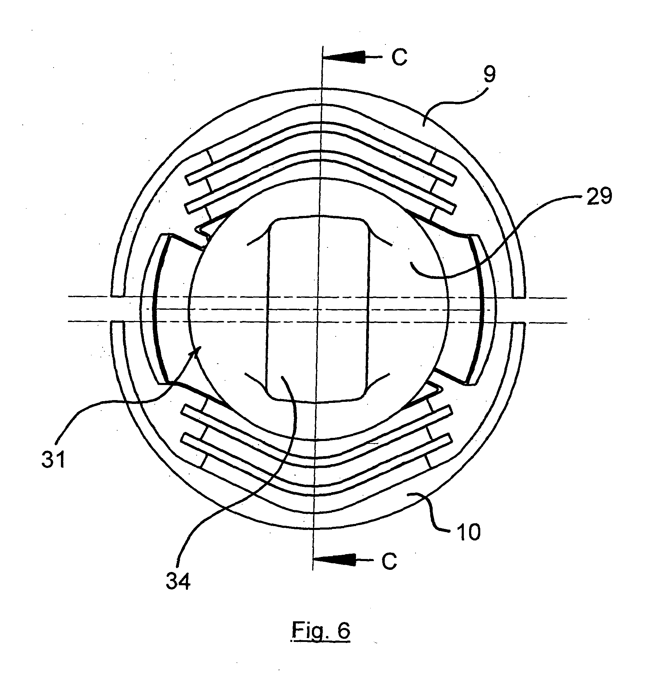

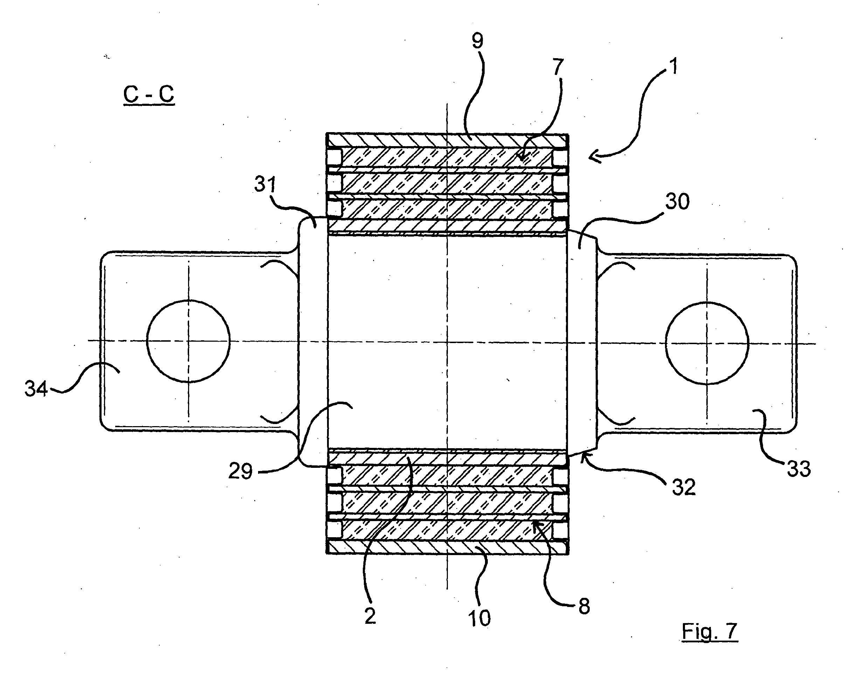

In Fig. 5 ist eine Elastomerbuchse 1 in einem Zustand gezeigt, in dem die Sollbruchstelle 4 aufgerissen und die Elastomerbuchse 1 um das Klappscharnier 3 aufgeschwenkt ist, der Gestalt dass der Innendurchmesser der Elastomermetallbuchse 1 für eine Montage vergrößert ist. Dies wird im weiteren auch anhand der Fig. 6 und 7 erläutert, in denen die Elastomermetallbuchse 1 bereits auf einem Lagerzapfen 29 in der gewünschten Position aufgesteckt ist.

Insbesondere aus Fig. 7 wird der langgestreckte Lagerzapfen 29 ersichtlich, auf dem in einem axialen Abstand entsprechend der axialen Länge der Elastomermetallbuchse stegförmige, ringförmig umlaufende Stützschultern 30, 31 angebracht sind. Die eine Stützschulter weist hier eine Konusfläche 32 als Aufschiebe-Schrägfläche auf.

In Fig. 5 wird der Zustand gezeigt, bei dem die Elastomermetallbuchse 1 axial über die Konusfläche 32 und Stützschulter 30 aufgeschoben wird. Die Stützschulter 30 hat dabei einen insgesamt größeren Durchmesser als das Innenbuchsenteil 2 im Herstellzustand, so dass beim axialen Aufschiebevorgang eine radial nach außen gerichtete Kraft auf das Innenbuchsenteil 2 wirkt. Dadurch wird die Sollbruchstelle 4, wie in Fig. 5 gezeigt, aufgerissen und durch Aufklappen des Klappscharniers 3 kann die Elastomermetallbuchse 1 in den Bereich zwischen die Stützschultern 30, 31 aufgesteckt werden, wo sie durch vorzugsweise zumindest teilweise elastisches Zurückschwenken axial fixiert gehalten wird, wie dies in den Fig. 6 und 7 gezeigt ist.

Weiter ist aus Fig. 7 ersichtlich, dass am Lagerzapfen 29 jeweils axial endseitig neben den Stützschultern 30, 31 Anschlusspratzen 33, 34 mit Bohrungen zur Aufnahme von zum Beispiel Schraubverbindungen angeformt sind.

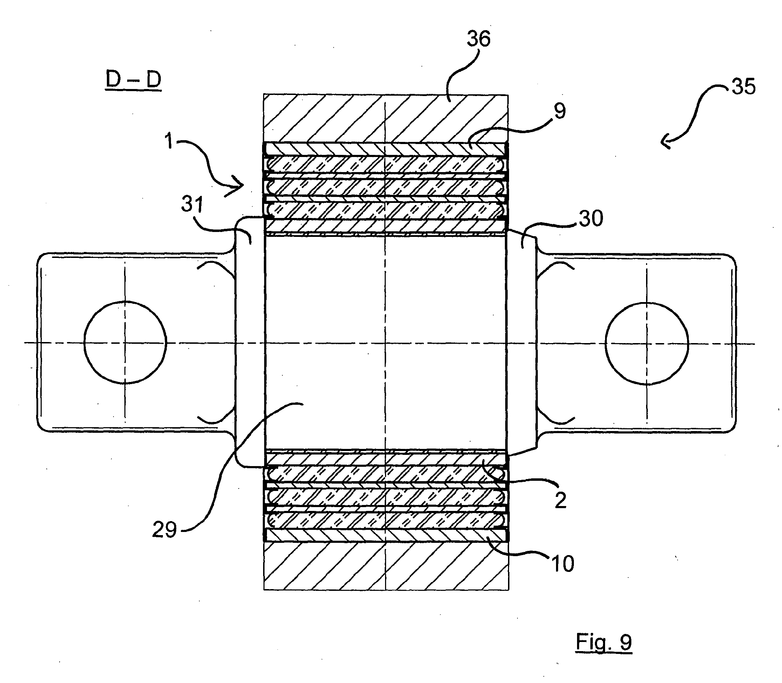

In den Fig. 8 und 9 ist ein fertig montiertes Lager 35 dargestellt, bei dem das vormontierte Lager aus dem Lagerzapfen 29 mit der aufgesteckten Elastomermetallbuchse 1 entsprechend der Fig. 6 und 7 in ein zylindrisches Aufnahmeauge 36 mit vergleichsweise geringerem Durchmesser eingepresst ist. Dadurch wird in den Elastomerschichten 7, 8 eine Vorspannung aufgebaut und der Abstand 11 zwischen den Außenschalen 9, 10 wird geschlossen, so dass sich ein durchgehender zylindrischer Ring ausbildet. Neben der aufgebauten Vorspannung wird die Elastomermetallbuchse 1 drehfest im Aufnahmeauge 36 gehalten. Dagegen soll über einem bestimmten Losbrechmoment ein Durchrutschen der Elastomermetallbuchse 1 auf dem Lagerzapfen möglich sein.

Bei der ersten Ausführungsform (Fig. 1 und 2) wird dies durch den Gummifilm 26 begünstigt, welcher auf einem gefetteten Lagerzapfen 29 durchrutschen kann. Bei der zweiten Ausführungsform kann, begünstigt durch die Schmiermitteltaschen 28, unmittelbar das Innenbuchsenteil 2 aus Kunststoff auf dem Lagerzapfen 9 durchrutschen. Das Losbrechmoment für den Durchrutschvorgang soll dabei so hoch dimensioniert werden, dass kein betriebsmäßiges kontinuierliches Durchrutschen erfolgt, sondern auch das Durchrutschen lediglich zu Einstellzwecken erfolgt und dort in der jeweiligen Einstellposition Lagerbewegungen molekular im Elastomermaterial aufgenommen werden.

Bei einer bevorzugten Ausführung der beschriebenen elastischen Lagerung eines Stabi-Lenkers an einem Nutzfahrzeug wird das Lager mit seiner Lagerachse quer zum Fahrzeug und damit quer zur Fahrtrichtung eingebaut, wobei die Elastomerschichten vertikal übereinander liegen. Der Lagerzapfen ist dabei aufbauseitig befestigt und das Aufnahmeauge ist endseitig Bestandteil des Stabi-Lenkers.

## Patentansprüche

1. Elastisches Lager mit einer Elastomermetallbuchse, insbesondere für die Lagerung eines Stabi-Lenkers an einem Kraftfahrzeug,
mit einem formstabilen Aufnahmeauge (36) als erstem Lageranschluss,
mit einem formstabilen Lagerzapfen (29) als zweitem Lageranschluss, und
mit einer den Lagerzapfen (29) formschlüssig umgreifenden, an einem achsparallelen Klappscharnier (3) aufklappbaren Elastomermetallbuchse (1) die im montierten Zustand unter Vorspannung im Elastomermaterial in das Aufnahmeauge (36) eingepresst ist,
**dadurch gekennzeichnet,**
**dass** die Elastomermetallbuchse (1) im Herstellzustand ringförmig geschlossen ist, mit einer etwa achsparallel verlaufenden und gegenüberliegend zum Klappscharnier aufgebrachten Sollbruchstelle (4), die durch Krafteinwirkung bei oder vor dem Aufstecken der Elastomermetallbuchse (1) auf den Lagerzapfen (29) aufreißbar ist, so dass zum Aufstecken der Innendurchmesser der Elastomermetallbuchse (1) durch Aufschwenken am Klappscharnier (3) vergrößerbar ist.

2. Elastisches Lager nach Anspruch 1, **dadurch gekennzeichnet, dass** auf dem Lagerzapfen (29) im axialen Abstand entsprechend der axialen Länge der Elastomermetallbuchse (1) stegförmige, vorzugsweise ringförmig umlaufende Stützschultern (30, 31) angebracht sind, zwischen denen die Elastomermetallbuchse (1) aufgesteckt und damit axial fixiert ist.

3. Elastisches Lager nach Anspruch 2, **dadurch gekennzeichnet, dass** am Lagerzapfen (29) jeweils axial endseitig neben den Stützschultern (30, 31) Anschlusspratzen (33, 34) angebracht sind.

4. Elastisches Lager nach Anspruch 2 oder Anspruch 3, **dadurch gekennzeichnet, dass** an wenigstens einer Stützschulter (30) eine Konusfläche (32) als Aufschiebeschrägfläche geformt ist, wobei axial über die Konusfläche (32) und die Stützschulter (30) die Elastomermetallbuchse (1) aufschiebbar ist, dergestalt dass dabei die Sollbruchstelle (4) aufreißt und der Innendurchmesser der Elastomermetallbuchse (1) durch Aufschwenken am Klappscharnier (3) vergrößerbar ist und durch weiteres axiales Aufschieben die Elastomermetallbuchse (1) in den Bereich zwischen die Stützschultern (30, 31) gelangt und dort durch Zurückschwenken, vorzugsweise durch zumindest teilweises elastisches Zurückschwenken eingreift.

5. Elastisches Lager nach einem der Ansprüche 1 bis 4, **dadurch gekennzeichnet, dass** die Elastomermetallbuchse (1) einem Innenbuchsenteil (2) Metall oder Kunststoff besteht, auf dem radial außen festhaftend durch jeweils radial gegenüberliegende Freiräume (5, 6)unterbrochen, Elastomerschichten (7, 8) angebraucht sind, und dass an den Elastomerschichten (7, 8) Außenschalen (9, 10) aus Metall oder Kunststoff festhaftend angebracht sind, die im fertig montierten Zustand formschlüssig unter Vorspannung an der Innenwand des Aufnahmeauges (36) anliegen, wobei die Außenschalen (9, 10) entweder nur den Bogenbereich der Elastomerschichten (7, 8) abdecken oder am Umfang so weitergeführt sind, dass sie an den Längsrändern aneinandergrenzen, und
dass am Innenbuchsenteil (2) die längsverlaufende Sollbruchstelle (4) neben einer Elastomerschicht (7) und das längsverlaufende Klappscharnier (3) radial gegenüber neben der anderen Elastomerschicht (8) liegt.

6. Elastisches Lager nach Anspruch 5, **dadurch gekennzeichnet, dass** in den Freiräumen (5, 6) zwischen den Elastomerschichten (7, 8) auf dem Innenbuchsenteil (2), gegebenenfalls auf dortigen Materialverdickungen des Innenbuchsenteils (2) jeweils Radialanschläge (12, 13) aus Elastomermaterial festhaftend angebracht sind, die im statischen Betriebszustand einen freien Anschlagweg (14, 14a) zur jeweils benachbarten Anschlagwand aufweisen.

7. Elastisches Lager nach einem der Ansprüche 1 bis 6, **dadurch gekennzeichnet, dass** das Klappscharnier (3) durch eine längsverlaufende, jedoch bei der Montage nicht abreißbare Materialverdünnung eines dort materialeinheitlich durchgehenden Innenbuchsenteils (2) oder durch eine bei der Montage nicht abreißbare Elastomerschichtbrücke eines dort längsgeteilten stabilen Innenbuchsenteils gebildet ist.

8. Elastisches Lager nach einem der Ansprüche 1 bis 7, **dadurch gekennzeichnet, dass** die Sollbruchstelle (4) durch eine längsverlaufende, bei der Montage abreißbare, im Vergleich zum Klappscharnier dünnere Materialverdünnung eines dort materialeinheitlich durchgehenden Innenbuchsenteils (2) oder durch eine bei der Montage abreißbare, im Vergleich zu einer Elastomerschichtbrücke des Klappscharniers dünnere Elastomerschichtbrücke eines dort längsgeteilten stabilen Innenbuchsenteils gebildet ist.

9. Elastisches Lager nach Anspruch 7 oder Anspruch 8, **dadurch gekennzeichnet, dass** die längsverlaufende Materialverdünnung und/oder die Elastomerschichtbrücke wenigstens eine Längsnut gegebenenfalls eine perforierte Längsnut aufweisen.

10. Elastisches Lager nach einem der Ansprüche 5 bis9, **dadurch gekennzeichnet, dass** die Elastomerschichten (7, 8) mehrlagig ausgeführt sind, indem jeweils mindestens eine, bevorzugt zwei Zwischenbleche (15, 16,17, 18) eingeformt sind, die vorzugsweise im Herstellzustand die Elastomerschichten (7. 8) mit ihren Randbereichen überragen.

11. Elastisches Lager nach einem der Ansprüche 5 bis 10, **dadurch gekennzeichnet, dass** die Innenkontur (19) des Innenbuchsenteils (2) und die Außenkontur (20) der eingepressten Außenschalen (9, 10) entsprechend der Innenkontur des Aufnahmeauges (36) konzentrisch kreiszylinderförmig sind, und
dass demgegenüber die Außenkontur (22) des Innenbuchsenteils (2) und die Innenkontur (23) der Außenschalen (9, 10) sowie die dazwischen festhaftenden Elastomerschichten (7, 8) gegebenenfalls mit ihren Zwischenblechen (15, 16; 17, 18) in Axialrichtung gesehen flacher gestaltet sind, mit jeweils gegenüberliegenden geraden Flächenbereichen, die durch einen Übergangsbogen (24, 25) verbunden sind, wodurch das elastische Lager (35) bei einer radialen Belastung quer zu den Elastomerschichten (7, 8) relativ hart und bei einer radialen Belastung in Richtung der flacheren Elastomerschichten (7, 8) und der Freiräume (5, 6) relativ weich ist.

12. Elastisches Lager nach Anspruch 11, **dadurch gekennzeichnet, dass** das elastische Lager (35) zur Lagerung eines Stabi-Lenkers mit seiner Lagerachse quer zum Fahrzeug und damit quer zur Fahrtrichtung eingebaut ist, wobei die Elastomerschichten (7, 8) vertikal übereinander liegen, wobei
der Lagerzapfen (29) aufbauseitig befestigt ist und das Aufnahmeauge (36) endseitig Bestandteil des Stabi-Lenkers ist.

13. Elastisches Lager nach einem der Ansprüche 5 bis 12, **dadurch gekennzeichnet, dass** das Innenbuchsenteil (2) aus einer Aluminiumlegierung hergestellt ist, und
dass die Innenseite des Innenbuchsenteils (2) mit einem festhaftenden Gummifilm (26) versehen ist, so dass das Innenbuchsenteil (2) über einer vorgebbaren Drehbelastung auf dem bevorzugt gefetteten Lagerzapfen (29) durchrutschen kann.

14. Elastisches Lager nach einem der Ansprüche 5 bis 12, **dadurch gekennzeichnet, dass** das Innenbuchsenteil (2) aus Kunststoff hergestellt ist, und
dass an der Innenseite des Innenbuchsenteils (2) mit Schmiermittel befüllbare Schmiertaschen (28) angebracht sind, so dass das Innenbuchsenteil (2) über einer vorgebbaren Drehbelastung auf dem Lagerzapfen (29) durchrutschen kann.
